(19) Europäisches Patentamt
European Patent Office
Office européen des brevets

(11) **EP 3 694 650 B1**

(12) **FASCICULE DE BREVET EUROPEEN**

(45) Date de publication et mention de la délivrance du brevet:
**01.12.2021 Bulletin 2021/48**

(21) Numéro de dépôt: **18782758.9**

(22) Date de dépôt: **11.10.2018**

(51) Int Cl.:
*B03C 3/08* (2006.01)       *B03C 3/14* (2006.01)
*G01N 15/02* (2006.01)

(86) Numéro de dépôt international:
**PCT/EP2018/077801**

(87) Numéro de publication internationale:
**WO 2019/073006 (18.04.2019 Gazette 2019/16)**

(54) **METHODE ET DISPOSITIF DE TRI DE FIBRES EN SUSPENSION DANS UN AEROSOL PAR LA COMBINAISON DE FORCES ELECTROSTATIQUES ET DE GRAVITE**

VERFAHREN UND VORRICHTUNG ZUM SORTIEREN VON IN EINEM AEROSOL SUSPENDIERTEN FASERN UNTER VERWENDUNG EINER KOMBINATION VON ELEKTROSTATISCHEN KRÄFTEN UND SCHWERKRAFT

SORTING METHOD AND DEVICE FOR FIBRES SUSPENDED IN AN AEROSOL, USING A COMBINATION OF ELECTROSTATIC FORCES AND GRAVITY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.10.2017 FR 1759587**

(43) Date de publication de la demande:
**19.08.2020 Bulletin 2020/34**

(73) Titulaire: **Commissariat à l'Energie Atomique et aux Energies Alternatives
75015 Paris (FR)**

(72) Inventeurs:
• **CLAVAGUERA, Simon**
  **38000 Grenoble (FR)**
• **POURPRIX, Michel**
  **91310 Montlhery (FR)**
• **TARDIF, François**
  **38250 Lans En Vercours (FR)**

(74) Mandataire: **Nony
11 rue Saint-Georges
75009 Paris (FR)**

(56) Documents cités:
FR-A2- 2 658 916        US-A- 5 117 190
US-A- 5 621 208         US-A- 6 012 343
US-A1- 2005 156 118     US-A1- 2015 221 490
US-B1- 8 192 523

EP 3 694 650 B1

## Description

### Domaine technique

La présente invention concerne le domaine du tri de micro et nano fibres dans un aérosol susceptible de contenir des fibres de tailles différentes et éventuellement des particules non fibreuses.

Elle concerne plus particulièrement la réalisation de dispositifs électrodynamiques pour mettre en œuvre un tel tri.

La présente invention vise à augmenter la sélectivité des analyseurs et des dispositifs de tri de particules fibreuses d'origine minérale (céramiques, verre, nanotubes de carbone, nanofils métalliques ...), organique ou biologique (cellules, bactéries, virus ...), en temps réel.

Elle vise également à augmenter les performances des méthodes existantes de détection et de mesure en continu en temps réel de concentrations de fibres d'amiantes mises en œuvre notamment dans les ambiances fortement empoussiérées.

Elle vise aussi à améliorer les performances des méthodes classiques de collecte sur filtre puis post analyse par microscopie.

Une des applications principales visées par l'invention est le tri de fibres d'amiante dans un aérosol susceptible de contenir des particules quelconques, non fibreuses.

Par « fibres d'amiante», on entend la définition et la catégorisation données par l'Organisation Mondiale de la Santé, comme suit :

- les fibres «OMS » d'amiante caractérisées par $L \geq 5\mu m$, $0,2 < d < 3\ \mu m$, rapport $L/d \geq 3$,
- les fibres courtes d'amiante (FCA) avec $0,5 < L < 5\ \mu m$, $d < 3\ \mu m$, $L/d \geq 3$,
- les fibres fines d'amiante (FFA) avec $L \geq 5\ \mu m$, $d < 0,2\ \mu m$ et $L/d \geq 3$,
- où L et d représentent respectivement la longueur et le diamètre.

Bien que décrit ci-après préférentiellement en référence à l'application de sélection des fibres d'amiante, l'invention s'applique au tri de tout type de particules fibreuses et pour diverses applications.

### Etat de la technique

La règlementation relative aux modalités de mesurage du niveau d'empoussièrement, notamment de fibres d'amiante, est claire, stricte et de plus en plus contraignante. Par exemple en France, la réglementation a récemment abaissé la valeur limite d'exposition professionnelle (VLEP) à 10 fibres par litre d'air inhalé sur huit heures de travail.

Pour mesurer la concentration en nombre de fibres dans l'air, on procède à ce jour par prélèvement sur membrane ou au moyen d'appareils à lecture directe.

Quel que soit le mode de prélèvement, un problème majeur est toujours rencontré dans le cas d'ambiances très empoussiérées. Il s'agit de la difficulté de compter exclusivement les fibres car, des particules de toutes sortes et origines (huile, ciment, peintures, ...) sont également présentes et peuvent perturber ou masquer les mesures.

En effet, notamment les opérations de curage et de désamiantage lors des processus de déconstruction ou de rénovation (bâtiment, matériel roulant ...) mettent en œuvre des surfaces sur lesquelles de multiples matériaux ont été déposés sur de très longues périodes. Il est donc particulièrement délicat de discriminer un faible nombre de fibres dans un environnement très fortement chargé en particules.

Compte tenu du faible nombre de fibres à compter, un certain nombre de dispositifs décrits dans la littérature ne sont plus pertinents aujourd'hui, en particulier du fait de leurs limites de détection.

En physique des aérosols, il est connu qu'en l'absence de champ électrique dans un espace ionisé unipolaire, les particules d'aérosol en suspension dans cet espace vont acquérir une charge électrique par le mécanisme de charge électrique par diffusion d'ions unipolaires à leur surface.

Un état d'équilibre va alors s'établir, la charge acquise par les particules dépendant notamment du produit Ni*t, où Ni représente la concentration en ions et t le temps de séjour des particules dans l'espace ionisé.

Au final, pour un produit Ni*t donné, il en résulte que la mobilité électrique acquise par ces particules, dans un mode de charge uniquement par diffusion d'ions, est d'autant plus grande que les particules seront plus fines. Ceci est illustré notamment par la figure 15.4 de la page 330 de la publication [1].

A contrario, il a été largement mis en évidence que le résultat est inverse pour des particules sous la forme de fibres chargées uniquement par diffusion d'ions unipolaires. Ainsi, la publication [2] montre que pour des fibres de diamètre donné, plus les fibres sont longues, plus leur mobilité électrique est élevée.

Cette propriété est mise à profit pour classifier des aérosols fibreux carbonés: étude [3]. Cette étude a été complétée quelques années plus tard par la même équipe en y décrivant des fibres de carbone et des fibres de verre :

voir publication [4]. En particulier, ils se sont intéressés à la mobilité électrique de fibres de carbone de diamètre égal à 3,74$\mu$m, en fonction de leur longueur, pour un produit Ni*t égal à 1,9*10[7] s/cm[3].

Les auteurs de la publication [5] ont également montré par le calcul le résultat inverse précité pour les fibres. Plus précisément, pour arriver à ce résultat, ces auteurs ont calculé la mobilité électrique de particules fibreuses de diamètre égal à 1 $\mu$m pour différentes longueurs de fibres égales respectivement à 3 $\mu$m, 10 $\mu$m et 20 $\mu$m, chargées uniquement par diffusion d'ions unipolaires. Ils démontrent aussi qu'à diamètre de fibres constant, la mobilité électrique des fibres est d'autant plus élevée que leur longueur est grande.

En outre, les auteurs de cette publication [5] montrent qu'il est possible de mettre en pratique cette particularité pour séparer les fibres par rapport aux autres particules en suspension dans un aérosol. Pour ce faire, ils préconisent l'utilisation en série de deux séparateurs, à savoir un premier séparateur aérodynamique pour réaliser une sélection selon la taille des particules par centrifugation, sédimentation ou inertie, et en aval du premier séparateur, un second séparateur mais de nature électrostatique pour sélectionner les fibres selon leur longueur.

Des travaux antérieurs mettent en avant le même principe physique et décrivent la séparation et le dépôt de particules fibreuses sur un substrat poreux : voir publications [6] et [7] du même auteur.

D'autres travaux qui mettent en œuvre un principe physique distinct de ceux décrits précédemment, se sont intéressés à la même problématique de séparation de particules fibreuses. Dans ces autres travaux, les particules sont neutralisées électriquement par une source radioactive et seule leur polarisation dans un champ électrique (diélectrophorèse) permet de les classer selon leur longueur. La famille de ces dispositifs porte le nom de « classifieur de fibres Baron » (en anglais « Baron Fiber Classifier ») en référence aux travaux de l'équipe du chercheur P.A. Baron : voir publication [8].

Dans un classifieur de fibres Baron, la conductivité des fibres et un prérequis pour permettre un tri efficace. Néanmoins, il semblerait que pour des niveaux d'humidité significatifs, typiquement supérieurs à 30%, l'eau condensée à la surface des fibres produit une couche conductrice qui permettrait de pallier aux problèmes de fibres non-conductrices : voir publication [9].

Une évaluation de ce type de dispositifs a été effectuée par la même équipe du chercheur Baron, par simulation en mécanique des fluides numérique (MFN), (terme anglais « Computational Fluid Dynamics » d'acronyme CFD): voir publication [10]. Il ressort de cette évaluation que ce type de dispositifs est limité aux fibres courtes.

Enfin, une amélioration récente de ce type de dispositifs a été proposée pour générer de grandes quantités de fibres triées pour des études de toxicologie : voir publication [11].

Le brevet US7931734B2 divulgue un système comprenant deux analyseurs différentiels de mobilité électrique (DMA) en série, qui permet, d'après les inventeurs, la séparation de fibres et de particules selon leurs charges. Pour rappel, un DMA est un instrument capable de séparer des particules selon leur mobilité électrique en sélectionnant pour une tension donnée une classe de mobilité électrique donnée.

Les demande de brevet WO 2013/058429A1 et brevets KR 101558480B1 et KR101322689B1 divulguent des dispositifs de séparation de fibres dans la forme générale toroïdale, qui mettent en œuvre le processus de charge des aérosols par diffusion d'ions unipolaires. Dans ces documents, il est mentionné que les effets électriques deviennent prépondérants dans la géométrie toroïdale décrite du fait que la vitesse d'écoulement diminue au fur et à mesure que l'on s'éloigne de l'axe du dispositif alors que la vitesse de dérive due au champ électrique reste constante.

Dans le domaine général des particules chargées électriquement, des travaux ont porté sur l'utilisation d'autres forces en plus d'un champ électrique, pour l'entraînement et la séparation des particules.

Tout d'abord, le champ de gravité a été mis à profit en sus d'un champ électrique.

Ainsi, le brevet US6012343B divulgue un analyseur DMA de type à écoulement radial qui met en série deux sélecteurs de mobilité électrique dits circulaires et dans lequel l'extraction des particules du sélecteur amont vers le sélecteur aval est réalisée par une fente en mettant à profit à la fois les champs électrique et de gravité.

Il a aussi été mis en œuvre l'utilisation combinée d'une force centrifuge et d'un champ électrique.

Le premier instrument se rapportant à cette utilisation combinée force centrifuge/champ électrique est divulgué dans brevet JP07055689, dont les résultats sont donnés dans la publication [12].

Dans cet instrument, les particules chargées électriquement circulent en écoulement laminaire entre deux cylindres concentriques tournant à la même vitesse. Pour faire en sorte que les particules tournent bien à la même vitesse que les cylindres, ce qui est essentiel pour un fonctionnement optimal, le flux d'air longitudinal est canalisé par des guides espaceurs isolants positionnés entre les deux cylindres. Ces espaceurs ont également pour fonction le maintien mécanique coaxial des cylindres entre eux. Un champ électrique est établi entre les cylindres, de sorte que les particules sont soumises d'une part à une force centrifuge proportionnelle à leur masse, d'autre part à une force centripète proportionnelle à leur charge électrique. Les particules qui sortent des cylindres ont ainsi la même caractéristique combinée charge/masse. En mesurant la charge d'une particule, on peut donc en déduire sa masse. Les autres particules se sont déposées dans l'équipement.

Ce type d'instrument est commercialisé par la société KANOMAX sous la dénomination « Model 3602 APM-II).

Une amélioration a été apportée à cet instrument d'analyse : voir publication [13]. L'amélioration consiste à faire tourner légèrement plus vite le cylindre intérieur par rapport au cylindre extérieur pour mieux équilibrer radialement les forces électrique et centrifuge.

L'appareil commercialisé par la société CAMBUSTION sous la dénomination « Model Centrifugal Particle Mass Analyser » met en œuvre cette amélioration.

De fait, il ressort de l'étude de l'état de l'art qu'il n'a pas été proposé de dispositif permettant de trier efficacement et simplement des fibres entre elles ou vis-à-vis de particules non fibreuses contenues dans un aérosol.

Or, il existe un besoin pour un tel dispositif afin de trier en continu des particules fibreuses entre elles et non fibreuses (en minimisant les dépôts de particules d'intérêt sur les parois) dans le cadre de procédés industriels ou pour augmenter la sélectivité d'analyseurs de fibres en temps réel existants, notamment en réduisant la part de détection liée aux particules non fibreuses susceptibles de masquer le comptage des fibres.

Le but général de l'invention est alors de répondre au moins en partie à ce besoin.

Exposé de l'invention :

Pour ce faire, l'invention a tout d'abord pour objet, une méthode de tri, de préférence en continu, de fibres en suspension dans un aérosol susceptible de contenir des fibres de différentes tailles et éventuellement des particules non fibreuses, comprenant les étapes suivantes:

   a/ charge des particules en suspension dans l'aérosol, par diffusion d'ions unipolaires;
   b/ application d'un champ électrique entre deux surfaces planes électriquement conductrices, et agencées sensiblement à l'horizontal ; le champ électrique étant dirigé de telle sorte qu'il exerce une force électrostatique sur les particules chargées, en opposition à la force de gravité ;
   c/ introduction d'un flux d'aérosol depuis une entrée de hauteur correspondant à au moins une partie de la hauteur de l'espace délimité entre les deux surfaces planes ; l'écoulement du flux d'air étant non turbulent dans l'espace entre surfaces planes ; le flux d'air circulant depuis et/ou autour de l'entrée jusqu'à une ou plusieurs sorties ;
   d/ récupération de la partie de flux d'air chargée en fibres et circulant à au moins l'une des sorties dans la partie supérieure de l'espace, ou collecte des fibres sur la surface plane du dessus qui est sous la forme d'une membrane filtrante ; les fibres récupérées dans la partie de flux d'air ou collectées sur la membrane filtrante étant triées des particules présentant un facteur de forme plus faible ou non fibreuses initialement présentes dans l'aérosol.

Selon un mode de réalisation avantageux, la méthode comprend en ourre une étape d'/ simultanée à l'étape d/, selon laquelle on récupère la partie de flux d'air chargée en particules non fibreuses et circulant à au moins l'une des sorties dans la partie inférieure de l'espace, ou collecte des particules non fibreuses sur la surface plane du dessous qui est sous la forme d'une membrane filtrante.

Confrontés à la problématique de séparation de fibres d'amiante dans un aérosol contenant des particules quelconques, non fibreuses et à la non pertinence des analyseurs de fibres existants, les inventeurs ont pensé judicieusement à mettre en exergue la différence de trajectoires auxquelles pouvaient être soumises des fibres de différents facteurs de forme et particules chargées sous l'influence conjointe des forces électriques et de gravité.

Ainsi, ils ont créé les conditions pour mettre à profit cette différence afin de récupérer/collecter les fibres séparées des particules non fibreuses présentes dans le même aérosol initial ou pour trier des fibres présentant différents facteurs de forme.

Selon une variante, avec des surfaces planes qui sont des plaques planes rectangulaires :

   -   l'étape c/ est réalisée par introduction de l'aérosol dans une fente d'entrée agencée dans l'espace entre plaques et par circulation d'un flux longitudinal d'air filtré introduit de part et d'autre de la fente à co-courant du flux d'aérosol ;
   -   l'étape d/ est réalisée par récupération de la partie du flux d'air chargée en fibres dans un canal de sortie délimité entre la plaque plane du dessus et une paroi de séparation de flux agencée entre les deux plaques planes;
   -   le cas échéant, l'étape d'/ est réalisée par récupération de la partie du flux d'air chargée en particules non fibreuses dans un canal de sortie délimité entre la plaque plane du dessous et une paroi de séparation de flux agencée entre les deux plaques planes.

Selon une autre variante, avec des surfaces planes qui sont des plaques pleines circulaires:

   -   l'étape c/ est réalisée par introduction de l'aérosol dans une fente d'entrée agencée dans l'espace entre plaques et par circulation d'un flux radial d'aérosol vers le centre des surfaces ;
   -   l'étape d/ est réalisée par récupération de la partie du flux d'air chargée en fibres dans un conduit de sortie réalisé dans le prolongement axial dans la plaque circulaire sur le dessus de celle-ci ;
   -   le cas échéant, l'étape d'/ est réalisée par récupération de la partie du flux d'air chargée en particules non fibreuses dans un conduit de sortie réalisé dans le prolongement axial dans la plaque circulaire sur le dessous de celle-ci.

Selon une autre variante, avec au moins la surface plane du dessus qui est une membrane filtrante circulaire :

- l'étape c/ est réalisée par introduction de l'aérosol dans une fente d'entrée agencée dans l'espace entre plaques ou dans tout l'espace entre plaques et par circulation d'un flux radial d'aérosol vers le centre des surfaces;
- l'étape d/ est réalisée par collecte des fibres sur la membrane filtrante, le flux d'air dépourvu des fibres collectées étant récupéré dans un orifice de sortie au-dessus de la membrane filtrante ;
- le cas échéant, l'étape d'/ est réalisée par collecte des particules non fibreuses sur une membrane filtrante, le flux d'air dépourvu des particules collectées étant récupéré dans un orifice de sortie au-dessous de la membrane filtrante.

Selon une autre variante, avec des surfaces planes qui sont les faces de dessous de deux disques évidés à bord circulaire concave, agencés à l'horizontal coaxialement l'un dans l'autre en définissant entre eux un espace; l'entrée étant un conduit réalisé dans le prolongement axial du disque extérieur sur le dessus de celui-ci; la sortie étant un conduit réalisé dans le prolongement axial du disque intérieur sur le dessus de celui-ci ; la face du dessous du disque intérieur étant au moins en partie une membrane filtrante:

- l'étape b/ est réalisée par application du champ électrique uniforme entre les deux disques, le champ électrique uniforme étant dirigé du bas vers le haut entre la face du dessous du disque extérieur et la face du dessous du disque intérieur;
- l'étape c/ est réalisée par introduction de l'aérosol depuis le conduit d'entrée; l'écoulement du flux d'air étant non turbulent dans l'espace entre les deux disques ; le flux d'air circulant depuis le conduit d'entrée jusqu'au conduit de sortie;
- l'étape d/ est réalisée par collecte des fibres sur la membrane filtrante; les fibres collectées sur la membrane filtrante étant séparées des particules non fibreuses initialement présentes dans l'aérosol et tombées par gravité dans l'espace entre faces du dessous.

L'invention a également pour objet un dispositif pour la mise en œuvre de la méthode de tri qui vient d'être décrite, comprenant :

- deux surfaces planes électriquement conductrices et agencées sensiblement à l'horizontal ;
- des moyens pour appliquer un champ électrique entre les deux surfaces planes, du bas vers le haut ;
- des moyens pour introduire un flux d'aérosol de fibres en suspension dans un aérosol susceptible de contenir des particules non fibreuses, depuis une entrée de hauteur correspondant à au moins une partie de la hauteur de l'espace délimité entre les deux surfaces planes ;
- des moyens pour récupérer la partie de flux d'air chargée en fibres et circulant à au moins l'une des sorties dans la partie supérieure de l'espace, ou collecte des fibres sur la surface plane du dessus qui est sous la forme d'une membrane filtrante.

Selon un mode de réalisation avantageux, le dispositif comprend en outre des moyens pour récupérer la partie de flux d'air chargée en particules non fibreuses et circulant à au moins l'une des sorties dans la partie inférieure de l'espace, ou collecte des particules sur la surface plane du dessous qui est sous la forme d'une membrane filtrante.

Selon une variante de réalisation, les deux surfaces planes sont des plaques planes rectangulaires, l'entrée étant une fente agencée dans l'espace entre plaques, la sortie étant un canal délimité entre la plaque plane du dessus et une paroi de séparation de flux agencée entre les deux plaques planes.

Selon une autre variante, les surfaces planes sont des plaques pleines circulaires, l'entrée étant une fente circulaire agencée dans l'espace entre plaques, la sortie étant un conduit réalisé dans le prolongement axial dans la plaque circulaire du dessus.

Avantageusement, le dispositif peut comprendre en outre un conduit de récupération de la partie du flux contenant les particules non fibreuses, le conduit réalisé dans le prolongement axial dans la plaque circulaire du dessous.

Selon une autre variante, les surfaces planes sont des surfaces circulaires dont au moins celle de dessus comprend une membrane filtrante; l'entrée étant une fente circulaire agencée dans l'espace entre surfaces circulaires, la sortie étant un conduit réalisé dans le prolongement axial au-dessus de la membrane filtrante.

Selon une autre variante, les surfaces planes sont des surfaces circulaires dont au moins celle de dessus comprend une membrane filtrante; l'entrée étant constituée par tout l'espace entre surfaces circulaires, la sortie étant un conduit réalisé dans le prolongement axial au-dessus de la membrane filtrante.

Selon une autre variante, les surfaces planes sont les faces de dessous de deux disques évidés à bord circulaire concave, agencés à l'horizontal coaxialement l'un dans l'autre en définissant entre eux un espace; l'entrée étant un conduit réalisé dans le prolongement axial du disque extérieur sur le dessus de celui-ci; la sortie étant un conduit réalisé dans le prolongement axial du disque intérieur sur le dessus de celui-ci ; la face du dessous du disque intérieur étant au moins en partie une membrane filtrante.

L'invention a enfin pour objet l'utilisation d'une méthode décrite ci-avant et/ou d'un dispositif décrit précédemment pour la détection et la mesure de concentration en nombre de fibres, en particulier de fibres d'amiantes, dans l'air, notamment dans un environnement empoussiéré.

La méthode et le dispositif selon l'invention sont particulièrement adaptés à la détection et mesure de concentrations en fibres suffisamment pesantes, telles que les fibres OMS d'amiante. Toutefois, la méthode et le dispositif selon l'invention peuvent être utilisés la détection et mesure de concentrations en fibres courtes d'amiante (FCA) et/ou en fibres fines d'amiante (FFA).

On peut utiliser la méthode et/ou réaliser l'intégration du dispositif selon l'invention en amont d'un système de mesure en temps réel des concentrations de fibres d'amiante dans l'air, notamment pour mesurer en continu les concentrations et leurs variations dans le temps.

Description détaillée

D'autres avantages et caractéristiques ressortiront mieux à la lecture de la description détaillée, faite à titre illustratif et non limitatif, en référence aux figures suivantes parmi lesquelles:

- la figure 1 est une vue schématique en coupe longitudinale d'un dispositif de tri de fibres à plaques planes selon l'invention;
- la figure 2 reprend la figure 1 et indique les paramètres de dimension et de vitesses entrant dans le calcul de trajectoires des particules circulant entre les plaques planes;
- la figure 3 schématise, en fonction de différentes valeurs d'élancement de fibres (rapport longueur/diamètre), les différentes trajectoires suivies par les fibres circulant dans le dispositif de la figure 1 ;
- la figure 4 représente une synthèse, en fonction de différentes valeurs d'élancement, des différentes trajectoires suivies à la fois par les fibres et les particules non fibreuses de volume équivalent contenues dans un même aérosol, circulant dans le dispositif de la figure 1 ;
- la figure 5 est une vue schématique en coupe longitudinale d'une première variante d'un dispositif ;
- la figure 6 est une vue schématique en coupe longitudinale d'une deuxième variante d'un dispositif ;
- la figure 7 est une vue schématique en coupe longitudinale d'une troisième variante d'un dispositif ;
- la figure 8 est une vue schématique en coupe longitudinale d'une quatrième variante d'un dispositif ;
- la figure 9 est une vue schématique en coupe longitudinale d'une cinquième variante d'un dispositif ;
- la figure 10 est une vue schématique en coupe longitudinale d'une sixième variante d'un dispositif.

Dans l'ensemble de la présente demande, les termes « vertical », « inférieur », « supérieur », « bas », « haut », « dessous », « dessus », « hauteur » sont à comprendre par référence par rapport à un dispositif de séparation selon l'invention agencé à l'horizontal ou à la verticale.

De même, les termes « entrée », « sortie », « amont » et « aval » sont à comprendre par référence par rapport au sens du flux d'aérosol dans un dispositif selon l'invention. Ainsi, l'entrée désigne une zone du dispositif par lequel l'aérosol contenant les fibres et les particules non fibreuses est introduit tandis que celui de sortie désigne celui par lequel le flux d'air chargé uniquement en fibres est évacué.

Par souci de clarté, les mêmes éléments des dispositifs de tri selon les exemples illustrés sont désignés par les mêmes références numériques.

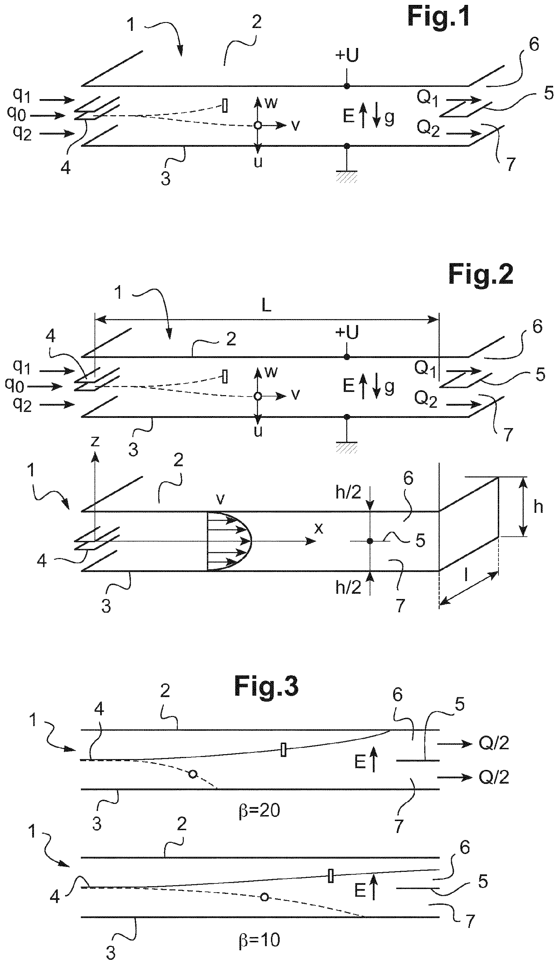

On a représenté en figure 1, un exemple de dispositif 1 pour le tri de fibres et éventuellement de particules non fibreuses contenues initialement dans un aérosol.

On précise que préalablement avant l'introduction de l'aérosol dans le dispositif 1, les particules de l'aérosol sont chargées négativement par diffusion d'ions unipolaires. Dans le cadre de l'invention, on peut tout à fait envisager l'inverse, c'est-à-dire des particules chargées positivement.

Le dispositif de tri 1 comprend tout d'abord deux plaques 2, 3 planes, parallèles, agencées à l'horizontal. Ces plaques 2,3 sont électriquement conductrices.

A une extrémité longitudinale des plaques 2, 3 est agencée une fente d'entrée 4, au milieu de l'espace entre plaques, c'est-à-dire que le milieu de la fente 4 est à la moitié de la hauteur h de l'espace entre plaques 2, 3. La fente 4 peut par exemple être réalisée par deux plaques également planes et parallèles entre elles mais sur une hauteur bien moindre que l'espace entre plaques 2, 3.

A l'autre extrémité longitudinale, est agencée une paroi de séparation 5 également au milieu de l'espace entre plaques 2,3. Cette paroi 5 délimite donc avec la plaque du dessus 2, un canal 6 tandis qu'elle délimite avec la plaque du dessous 3, un canal 7.

On génère un champ électrique E, de préférence uniforme et de préférence d'intensité constante entre les plaques 2, 3, le champ E étant dirigé du bas vers le haut. Pour ce faire, par exemple, la plaque inférieure 3 est portée au potentiel zéro, tandis que la plaque supérieure 2 est au potentiel +U. Dans le cadre de l'invention, on peut tout à fait envisager l'inverse, c'est-à-dire des particules chargées positivement avec un champ électrique dans le dispositif égal à -U.

On introduit du côté de la fente 4, et fait circuler un flux longitudinal d'air filtré en écoulement non turbulent, dans l'espace entre plaques 2, 3. Le débit d'air filtré est séparé en un débit q1 entre la fente 4 et la plaque du dessus 2 et un débit q2 entre la fente 4 et la plaque du dessous 3.

L'aérosol est alors introduit par la fente 4, à un débit qo.

Les particules chargées électriquement sont donc soumises au champ électrique E, qui a tendance à les attirer vers la plaque supérieure 3, sauf si elles sont trop denses, auquel cas elles auront tendance à se déposer sur la plaque inférieure 2 sous l'action du champ de gravité g.

Ainsi, dans son parcours entre les plaques, toute particule, y compris une fibreuse, va être soumise à ces deux champs de forces antagonistes, champ de gravité g et champ électrique E.

Chaque particule, fibreuse ou non, va donc être soumise à deux vitesses transversales opposées:

- une vitesse ascendante due au champ électrique notée w, telle que w = Z*E, où Z est la mobilité électrique de la particule,
- une vitesse descendante due au champ de gravité notée u, telle que u = $\tau$ *g, où $\tau$ est le temps de relaxation de la particule. et g le champ de gravité terrestre.

La trajectoire d'une particule résultera donc de la composition de ces deux vitesses transversales u et w d'une part, de sa vitesse longitudinale v dans l'écoulement non turbulent d'autre part.

Pour une géométrie et un débit fixés, une valeur appropriée du champ E peut donc diriger les fibres ainsi que les fines particules très électriquement mobiles et non soumises à la gravité, dans la partie supérieure de l'espace entre plaques 2, 3, et diriger les particules non fibreuses en partie inférieure 7 de cet espace, surtout les grosses particules, peu mobiles électriquement, et soumises à la gravité.

On peut donc récupérer dans le canal de sortie 6, les fibres séparées et portées par le flux d'air au débit Q1.

En parallèle, on peut récupérer dans le canal de sortie 7, les fibres présentant le facteur de forme le plus faible ou les particules non fibreuses, portées par le flux d'air au débit Q2.

La somme des débits d'entrée $q_0$, $q_1$ et $q_2$ égale la somme des débits de sortie $Q_1$ et $Q_2$.

Ainsi séparées des fibres, les grosses particules ne peuvent plus masquer le dénombrement des fibres pour l'application mesure de fibres d'amiante.

Les inventeurs ont corroboré par calculs présentés ci-après la séparation entre fibres et particules non fibreuses par l'action conjuguée de force électrique résultant d'un champ E créé entre plaques planes, et champ de gravité terrestre g.

Dans les calculs, on considère le cas de fibres de carbone, précisément celles qui ont été utilisées dans les expériences mentionnées dans la publication [3], de diamètre 3,74 $\mu$m, chargées par diffusion d'ions unipolaires avec un produit Ni*t = 1,9.10[7] s/cm[3]. L'avantage d'utiliser des fibres de carbone est que ses caractéristiques électriques ont été particulièrement bien étudiées par les auteurs de la publication. Un autre avantage est aussi de se placer volontairement dans des conditions favorables pour mettre en évidence l'action du champ de gravité par rapport à l'action du champ électrique.

La trajectoire d'une particule s'obtient en composant les vitesses u, v, w où :

$$u = \boldsymbol{\tau}^*g$$

$$w = Z^*E,$$

soit

$$w - u = \frac{dz}{dt} = Z.E - \tau.g \qquad (1)$$

$$v = \frac{dx}{dt} = \frac{3}{2} * \frac{Q}{l*h} * \left(1 - 4 * \frac{z^2}{h^2}\right) \qquad (2)$$

avec

$\tau$ représente le temps de relaxation d'une particule, en seconde (s) g l'accélération de la pesanteur, en m/s$^2$ ;
Z la mobilité électrique de la particule, en m$^2$/(V*s);
E le champ électrique en V/m ;
Q le débit d'air d'entraînement de la particule en m$^3$/s ;
1 la largeur de canal de circulation du flux d'air ;
h la hauteur de circulation du flux d'air.

En éliminant dt, dans les équations (1) et (2), on parvient à

$$\frac{3}{2} * \frac{Q}{l*h} * \left(1 - 4 * \frac{z^2}{h^2}\right) * dz = (Z * E - \tau * g) * dx$$

Soit en réalisant l'intégration

$$\frac{3}{2} * \frac{Q}{l*h} * \int_0^z \left(1 - 4 * \frac{z^2}{h^2}\right) * dz = \int_0^x (Z * E - \tau * g) * dx$$

D'où l'équation finale (3) comme suit :

$$\frac{3}{2} * \frac{Q}{l*h} * \left(z - \frac{4}{3} * \frac{z^3}{h^2}\right) = (Z * E - \tau * g) * x$$

Pour calculer le temps de relaxation $\tau_f$ d'une fibre, on utilise l'équation (4) :

$$\tau_f = \frac{\rho * d'^2}{18 * \eta * \chi_f}$$

avec :

$\rho$ représente la masse volumique égale à $1{,}832.10^3$ kg/m$^3$ pour des fibres de carbone ;
d'= $d * (1{,}5 * \beta)^{1/3}$ et d est égal à 3,74 $\mu$m ;
$\eta$ représente la viscosité de l'air égale à $1{,}81*10^{-5}$ Pa.s ;
$\chi_f$ est le facteur de forme dépendant de $\beta$ ;
$\beta$ est l'élancement (rapport entre longueur et diamètre de fibres).

En prenant en compte les données expérimentales de la publication [3] et d'après l'équation (4), on obtient le tableau 1 ci-dessous des caractéristiques des fibres:

| $\beta$ | Xf | $Z_f$ en m$^2$/(V*s) | $\tau_f$ en s |
|------|-------|------------------|-------------|
| 10 | 1,269 | $7{,}97*10^{-8}$ | $3{,}77*10^{-4}$ |
| 20 | 1,541 | $11{,}27*10^{-8}$ | $4{,}93*10^{-4}$ |

On précise que les données expérimentales utilisées sont valables pour le produit $N_i$ *t égal à $1{,}9*10^{13}$ ions*s/m$^3$, où Ni est la concentration en ions unipolaires et t le temps de séjour.
Pour calculer le champ électrique E qui permet à des fibres de facteur $\beta$ égal à 20, d'arriver en haut de l'espace entre plaques, i.e. le plus proche de la plaque supérieure, avec x = L, on utilise l'équation (3) pour $z = \dfrac{h}{2}$, ce qui donne :

$$E = \frac{\dfrac{Q}{2*l*L} + \tau_f * g}{Z_f}$$

avec Q représentant le débit égal à 2 litre par min ; 1 = 5cm, L = 20cm, $\tau_f$ = 4,93*10$^{-4}$s, $Z_f$ = 11,27*10$^{-8}$ m$^2$/(V*s ) et g = 9,81 m/s$^2$, on obtient une valeur E de champ électrique égale à 5,76*10$^4$ V/m.

En reportant cette valeur dans l'équation (3) ci-avant, on dispose de tous les éléments pour trouver la trajectoire des fibres de facteur β égal à 20.

Pour la même valeur E, on peut trouver également tous les éléments pour trouver la trajectoire des fibres de facteur β égal à 10.

On peut procéder et faire les mêmes calculs pour une sphère équivalente en volume (les indices « se » ci-après correspondant à une sphère équivalente).

Soit $d_{se}$ le diamètre volumique d'une sphère équivalent à une fibre de diamètre d et de longueur $l_f$, alors on a la relation :

$$\frac{\pi * d^2}{4} * lf = \frac{4}{3} * \pi * (\frac{dse}{2})^3$$

Alors, avec β qui est le rapport entre longueur lf et diamètre d de fibre, on a l'équation (4) :

$$d_{se} = d * (1,5 * ß)^{1/3}.$$

Pour le calcul du temps de relaxation de la sphère on utilise l'équation (5) : $\tau_{se} = \dfrac{\rho * d_{se}^2}{18 * \eta * \chi_{se}}$ avec $\chi_{se}$ égal à 1.

Pour le calcul de mobilité électrique des sphères, la publication [1] permet de la déterminer pour un produit Ni *t égal à 10$^{13}$ ions*s/m$^3$.

Il est possible d'extrapoler pour se placer dans les conditions calculées pour les fibres soit avec Ni *t égal à 1,9*10$^{13}$ ions*s/m$^3$.

Pour ce faire, on utilise l'expression (15.24) de la page 325 de la publication [1], ce qui permet de trouver un coefficient multiplicateur égal à 1,083.

On obtient donc le tableau 2 ci-dessous des caractéristiques des sphères équivalentes:

| β | dse en $\mu$m | $\chi_{se}$ | $Z_{se}$ en m$^2$/(V*s ) | $\tau_{se}$ en s |
|----|------|---|-----------|-----------|
| 10 | 9.24 | 1 | 4,52*10$^{-8}$ | 4,78*10$^{-4}$ |
| 20 | 11.63 | 1 | 4,48*10$^{-8}$ | 7,59*10$^{-4}$ |

La trajectoire de ces deux types de particules, i.e. fibres et sphères équivalentes est illustrée figure 3 respectivement pour β = 20 et β = 10.

Il ressort de cette figure 3 que la séparation entre ce type de fibres et leurs particules sphériques équivalentes, en termes de volume et de masse, est donc clairement établie.

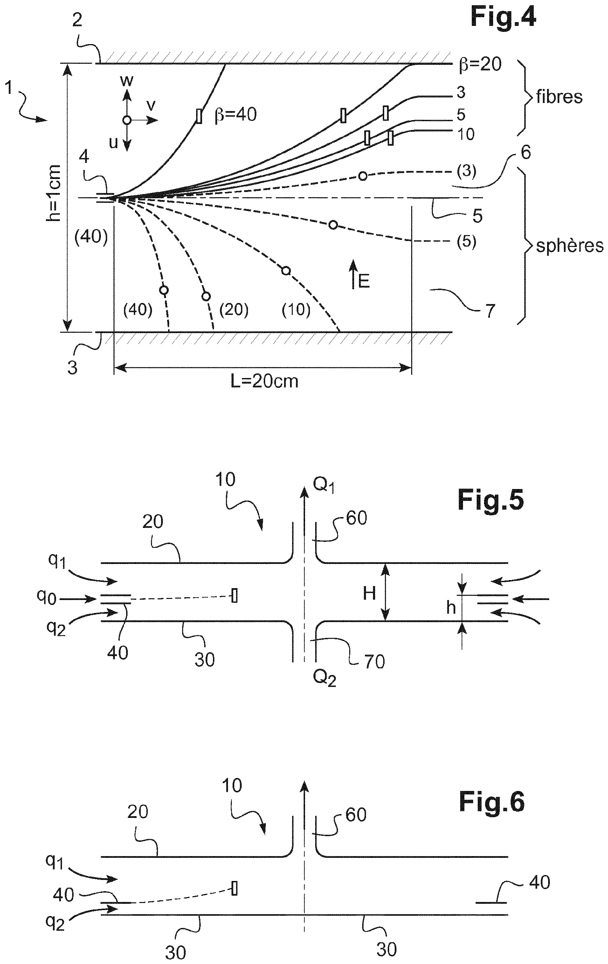

La figure 4 illustre les trajectoires pour des valeurs de β respectivement égales à 3, 5, 10, 20 et 40.

Les figures 5 et 6 montrent des variantes de dispositif 10 dans lesquels les plaques planes rectangulaires sont remplacées par des plaques pleines circulaires 20, 30 entre lesquelles l'aérosol et l'air filtré sont injectés et circulent en co-courant selon un écoulement radial de l'extérieur vers le centre des plaques 20, 30.

Dans la variante de la figure 5, l'entrée est une fente circulaire agencée 40 dans l'espace entre plaques 20, 30. La sortie par laquelle les fibres sont récupérées est un conduit 60 réalisé dans le prolongement axial dans la plaque circulaire 20 du dessus. Les particules non fibreuses tombées par gravité sont quant à elles évacuées par un conduit 70 réalisé dans le prolongement axial dans la plaque circulaire 30 du dessous.

Dans la variante de la figure 6, la fente d'entrée 40 est délimitée avec la plaque circulaire du dessous 30 et on réalise une récupération uniquement des fibres par le conduit axial 60 sur la plaque du dessus 20.

On peut envisager d'agencer des dispositifs selon les variantes des figures 5 et 6 en amont d'appareils à lecture directe, les grosses particules non fibreuses étant éliminées.

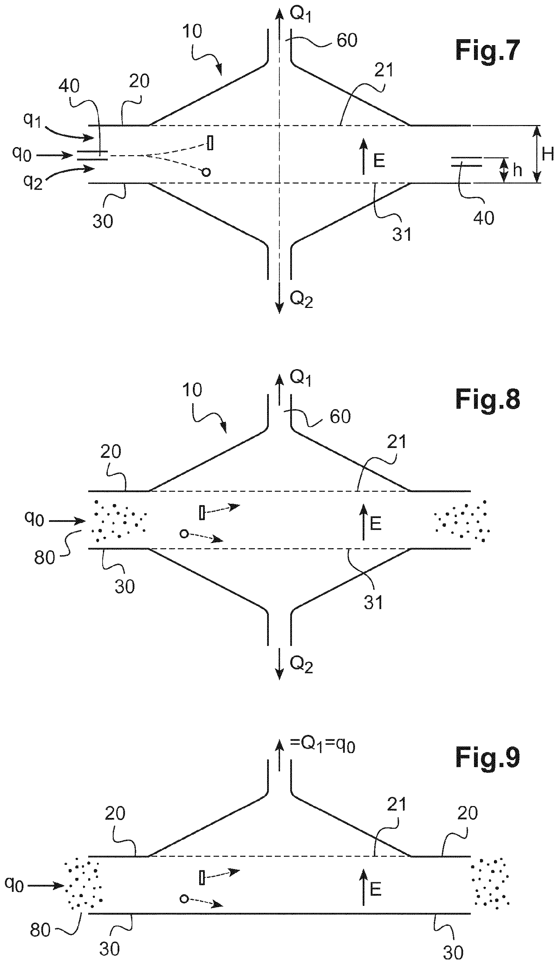

Les figures 7 à 9 montrent des variantes, dans lesquelles on injecte et on fait circuler l'aérosol et l'air filtré qui circulent également en co-courant selon un écoulement radial de l'extérieur vers le centre mais, au lieu de récupérer les fibres séparées dans un conduit 60 et le cas échéant les particules non fibreuses dans un conduit 70 comme dans les figures 5 et 6, on vient collecter les particules séparées sur une ou deux membranes filtrantes 21, 31 qui sont électriquement conductrices (ou isolantes, mais supportées par des grilles conductrices).

Dans la variante de la figure 7, on agence une membrane filtrante 21 en tant que surface de collecte du dessus et une membrane filtrante 31 en tant que surface de collecte du dessous. Le champ électrique E est appliqué entre les deux membranes filtrantes 21, 31 du bas vers le haut. L'aérosol est injecté radialement dans une fente circulaire 40 agencée dans l'espace entre membranes 21, 31. Les fibres séparées sont collectées sur la membrane du dessus 21, l'air les transportant étant évacué par un conduit de sortie 60 réalisé dans le prolongement axial au-dessus de la membrane filtrante 21. Les particules non fibreuses tombées par gravité sont collectées sur la membrane du dessous 31, l'air les transportant étant évacué par un conduit de sortie 70 réalisé dans le prolongement axial au-dessous de la membrane filtrante 31. Comme illustré, les conduits 60, 70 sont réalisés en bout d'un tronc de cône plein respectivement au-dessus de la membrane filtrante supérieure 21 et au-dessous de celle inférieure 31.

Le dispositif de la figure 8 est similaire à celui de la figure 7, à ceci près que l'aérosol est injecté radialement sur toute la hauteur de l'espace 80 entre les membranes 21, 31.

Le dispositif de la figure 9 comprend une seule membrane filtrante 21 pour la collecte des fibres séparées avec injection radiale sur toute la hauteur de l'espace 80 entre la membrane 21 et le disque plein 30.

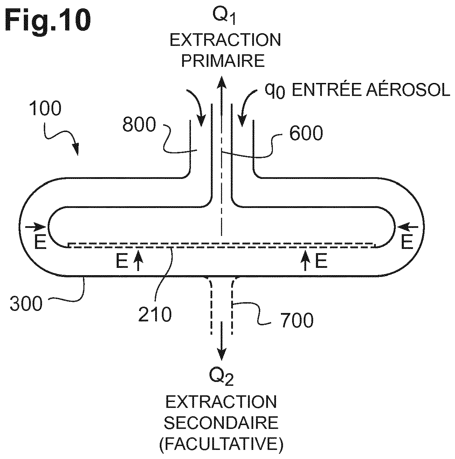

La figure 10 montre une variante de dispositif 100, qui permet d'augmenter la séparation des fibres par la force électrique et la séparation des grosses particules non fibreuses par le champ de gravité.

Dans cette variante, les surfaces planes entre lesquelles est établi le champ électrique sont constituées par la face de dessous 210, du disque 200, et la face de dessus du disque 300 agencés à l'horizontal coaxialement l'un dans l'autre en définissant entre eux un espace d'épaisseur constante.

Chacun de ces deux disques 200, 300 est évidé et à bord circulaire concave.

La face du dessous 210 du disque intérieur 200 est au moins en partie une membrane filtrante.

L'aérosol de particules chargées est ici introduit par un conduit 800 réalisé dans le prolongement axial du disque extérieur 300 sur le dessus de celui-ci puis circule dans l'espace entre disques 200, 300.

Les fibres séparées sont collectées sur la membrane 210, l'air les transportant étant évacué par un conduit de sortie 600 réalisé dans le prolongement axial au-dessus de la membrane filtrante 210. Le conduit de sortie 600 peut être coaxial au conduit d'entrée 800.

De manière facultative, les particules non fibreuses tombées par gravité peuvent être évacuées par l'air dans un conduit de sortie 700 réalisé dans le prolongement axial du disque extérieur 300 sur le dessous de celui-ci.

D'autres variantes et améliorations peuvent être apportées sans pour autant sortir du cadre de l'invention.

Ainsi, si dans les modes de réalisation illustrés le débit Q1 est montré égal à celui de Q2 égal au débit total divisé par deux Q/2, on peut très bien envisager d'avoir Q1 différent de Q2 et de Q/2.

Il en va de même sur q0, q1 et q2 qui peuvent être différents les uns des autres et également différent de q/3.

Par ailleurs, si dans l'ensemble des exemples illustrés, les surfaces planes sont parallèles entre elles et définissent un espace d'épaisseur constante, on peut très bien envisager de mettre en œuvre l'invention avec des surfaces non parallèles et donc avec un espace d'épaisseur variable.

L'invention n'est pas limitée aux exemples qui viennent d'être décrits; on peut notamment combiner entre elles des caractéristiques des exemples illustrés au sein de variantes non illustrées. La portée de l'invention est définie par les revendications annexées.

## Références citées

[1]: W. Hinds, « Aerosol Technology », 2nd Edition, 1999.

[2]: Zebel G., Hochrainer D., Boose C., "A sampling method with separated deposition of fibres and other particles", J. Aerosol Sci., 8:205-213 (1977).

[3]: Chen B.T., Yeh H.C., Hobbs C.H., "Size Classification of Carbon Fiber Aerosols", Aerosol Sci. Technol., 19:109-120 (1993).

[4]: Chen B.T., Yeh H.C., Johnson N.F., "Design and use of a virtual impactor and an electrical classifier for generation of test fiber aerosols with narrow size distributions", J. Aerosol Sci., 27(1):83-94 (1996).

[5]: Han R.J., Moss O.R., Wong B.A., « Airborne Fiber Separation by Electrophoresis and Dielectrophoresis: Theory and Design Considerations », Aerosol Sci. Technol., 21:241-258 (1994).

[6]: Griffiths W.D., « The selective separation of aerosol particles of different shapes », J. Aerosol Sci., 18(6):761-763 (1987).

[7]: Griffiths W.D., « The shape selective sampling of fibrous aerosols », J. Aerosol Sci., 19(6):703-713 (1988).

[8]: Baron P.A., Deye G.J., Fernback J., « Length separation of fibers », Aerosol Sci. Technol., 21:179-192 (1994).

[9]: Lilienfeld, P. "Rotational Electrodynamics of Airborne Fibers", J. Aerosol Sci. 4: 315-322 (1985).

[10]: Deye G.J., Gao P., Baron P.A., Fernback J., «Performance Evaluation of a Fiber Length Classifier», Aerosol Sci. Technol., 30:420-437 (1999).

[11]: Dubey P., Ghia U., Turkevich L.A., «Numerical investigation of sheath and aerosol flows in the flow combination section of a Baron fiber classifier», Aerosol Sci. Technol., 48:896-905 (2014).

[12]: Ehara, K., Hagwood, C., Coakley, K.J., « Novel method to Classify Aerosol Particles According to Their Mass-to-Charge Ratio », Aerosol Particle Mass Analyzer, J. Aerosol Sci, 27:217-234 (1996).

[13]: Olfert, J.S., Collings, N. « New Method for Particle Mass Classification: the Couette Centrifugal Particle Mass Analyser », J. Aerosol Sci, 36:1338-1352 (2005).

## Revendications

1. Méthode de tri de micro et nano fibres en suspension dans un aérosol susceptible de contenir des fibres de tailles différentes et éventuellement des particules non fibreuses, comprenant les étapes suivantes:

   a/ charge des particules en suspension dans l'aérosol, par diffusion d'ions unipolaires ;

   b/ application d'un champ électrique entre deux surfaces planes électriquement conductrices, et agencées sensiblement à l'horizontal ; le champ électrique étant dirigé de telle sorte qu'il exerce une force électrostatique sur les particules chargées, en opposition à la force de gravité ;

   c/ introduction d'un flux d'aérosol depuis une entrée de hauteur correspondant à au moins une partie de la hauteur de l'espace délimité entre les deux surfaces planes ; l'écoulement du flux d'air étant non turbulent dans l'espace entre surfaces planes ; le flux d'air circulant depuis et/ou autour de l'entrée jusqu'à une ou plusieurs sorties ;

   d/ récupération de la partie de flux d'air chargée en fibres et circulant à au moins l'une des sorties dans la partie supérieure de l'espace, ou collecte des fibres sur la surface plane du dessus qui est sous la forme d'une membrane filtrante ; les fibres récupérées dans la partie de flux d'air ou collectées sur la membrane filtrante étant triées des particules présentant un facteur de forme plus faible ou non fibreuses initialement présentes dans l'aérosol.

2. Méthode de tri selon la revendication 1, comprenant en outre une étape d'/ simultanée à l'étape d/, selon laquelle on récupère la partie de flux d'air chargée en particules non fibreuses et circulant à au moins l'une des sorties dans la partie inférieure de l'espace, ou on collecte des particules non fibreuses sur la surface plane du dessous qui est sous la forme d'une membrane filtrante.

3. Méthode de tri selon la revendication 1 ou 2, les surfaces planes étant des plaques planes rectangulaires, méthode selon laquelle :

   - l'étape c/ est réalisée par introduction de l'aérosol dans une fente d'entrée agencée dans l'espace entre plaques et par circulation d'un flux longitudinal d'air filtré introduit de part et d'autre de la fente à co-courant du flux d'aérosol ;

   - l'étape d/ est réalisée par récupération de la partie du flux d'air chargée en fibres dans un canal de sortie délimité entre la plaque plane du dessus et une paroi de séparation de flux agencée entre les deux plaques planes ;

   - le cas échéant, l'étape d'/ est réalisée par récupération de la partie du flux d'air chargée en particules non fibreuses dans un canal de sortie délimité entre la plaque plane du dessous et une paroi de séparation de flux agencée entre les deux plaques planes.

4. Méthode de tri selon la revendication 1 ou 2, les surfaces planes étant des plaques pleines circulaires, méthode selon laquelle :

- l'étape c/ est réalisée par introduction de l'aérosol dans une fente d'entrée agencée dans l'espace entre plaques et par circulation d'un flux radial d'aérosol vers le centre des surfaces;
- l'étape d/ est réalisée par récupération de la partie du flux d'air chargée en fibres dans un conduit de sortie réalisé dans le prolongement axial dans la plaque circulaire sur le dessus de celle-ci ;
- le cas échéant, l'étape d'/ est réalisée par récupération de la partie du flux d'air chargée en particules non fibreuses dans un conduit de sortie réalisé dans le prolongement axial dans la plaque circulaire sur le dessous de celle-ci.

**5.** Méthode de tri selon la revendication 1 ou 2, au moins la surface plane du dessus étant une membrane filtrante circulaire, méthode selon laquelle :

- l'étape c/ est réalisée par introduction de l'aérosol dans une fente d'entrée agencée dans l'espace entre plaques ou dans tout l'espace entre plaques et par circulation d'un flux radial d'aérosol vers le centre des surfaces;
- l'étape d/ est réalisée par collecte des fibres sur la membrane filtrante, le flux d'air dépourvu des fibres collectées étant récupéré dans un orifice de sortie au-dessus de la membrane filtrante ;
- le cas échéant, l'étape d'/ est réalisée par collecte des particules non fibreuses sur une membrane filtrante, le flux d'air dépourvu des particules collectées étant récupéré dans un orifice de sortie au-dessous de la membrane filtrante.

**6.** Méthode de tri selon la revendication 1 ou 2, les surfaces planes étant les faces de dessous de deux disques évidés à bord circulaire concave, agencés à l'horizontal coaxialement l'un dans l'autre en définissant entre eux un espace; l'entrée étant un conduit réalisé dans le prolongement axial du disque extérieur sur le dessus de celui-ci; la sortie étant un conduit réalisé dans le prolongement axial du disque intérieur sur le dessus de celui-ci ; la face du dessous du disque intérieur étant au moins en partie une membrane filtrante; méthode selon laquelle :

- l'étape b/ est réalisée par application du champ électrique uniforme entre les deux disques, le champ électrique uniforme étant dirigé du bas vers le haut entre la face du dessous du disque extérieur et la face du dessous du disque intérieur;
- l'étape c/ est réalisée par introduction de l'aérosol depuis le conduit d'entrée; l'écoulement du flux d'air étant non turbulent dans l'espace entre les deux disques ; le flux d'air circulant depuis le conduit d'entrée jusqu'au conduit de sortie;
- l'étape d/ est réalisée par collecte des fibres sur la membrane filtrante; les fibres collectées sur la membrane filtrante étant séparées des particules de facteurs de forme plus faibles ou non fibreuses initialement présentes dans l'aérosol et tombées par gravité dans l'espace entre faces du dessous.

**7.** Dispositif (1 ; 10 ; 100) pour la mise en œuvre de la méthode de tri selon l'une des revendications 1 à 6, comprenant :

- deux surfaces planes électriquement conductrices (2, 3 ; 20, 30 ; 200, 300), agencées sensiblement à l'horizontal ;
- des moyens pour appliquer un champ électrique (E) entre les deux surfaces planes, du bas vers le haut ;
- des moyens (4 ; 40 ; 800) pour introduire un flux d'aérosol de fibres en suspension dans un aérosol susceptible de contenir des particules de facteurs de formes différents ou non fibreuses, depuis une entrée de hauteur correspondant à au moins une partie de la hauteur de l'espace délimité entre les deux surfaces planes ;
- des moyens (5) pour récupérer la partie de flux d'air chargée en fibres et circulant à au moins l'une des sorties dans la partie supérieure de l'espace, ou collecte des fibres sur la surface plane du dessus qui est sous la forme d'une membrane filtrante ;

**8.** Dispositif selon la revendication 7, comprenant en outre des moyens (5) pour récupérer la partie de flux d'air chargée en particules non fibreuses et circulant à au moins l'une des sorties dans la partie inférieure de l'espace, ou collecte des particules sur la surface plane du dessous qui est sous la forme d'une membrane filtrante.

**9.** Dispositif selon la revendication 7 ou 8, les deux surfaces planes étant des plaques planes rectangulaires, l'entrée étant une fente agencée dans l'espace entre plaques, la sortie étant un canal délimité entre la plaque plane du dessus et une paroi de séparation de flux agencée entre les deux plaques planes.

**10.** Dispositif selon la revendication 7 ou 8, les surfaces planes étant des plaques pleines circulaires, l'entrée étant une fente circulaire agencée dans l'espace entre plaques, la sortie étant un conduit réalisé dans le prolongement axial dans la plaque circulaire du dessus.

**11.** Dispositif selon la revendication 10, comprenant en outre un conduit de récupération de la partie du flux contenant les particules non fibreuses, le conduit réalisé dans le prolongement axial dans la plaque circulaire du dessous.

**12.** Dispositif selon la revendication 7 ou 8, les surfaces planes étant des surfaces circulaires dont au moins celle de dessus comprend une membrane filtrante; l'entrée étant une fente circulaire agencée dans l'espace entre surfaces circulaires, la sortie étant un conduit réalisé dans le prolongement axial au-dessus de la membrane filtrante.

**13.** Dispositif selon la revendication 7 ou8, les surfaces planes étant des surfaces circulaires dont au moins celle de dessus comprend une membrane filtrante; l'entrée étant constituée par tout l'espace entre surfaces circulaires, la sortie étant un conduit réalisé dans le prolongement axial au-dessus de la membrane filtrante.

**14.** Dispositif selon la revendication 7 ou 8, les surfaces planes étant les faces de dessous de deux disques évidés à bord circulaire concave, agencés à l'horizontal coaxialement l'un dans l'autre en définissant entre eux un espace; l'entrée étant un conduit réalisé dans le prolongement axial du disque extérieur sur le dessus de celui-ci; la sortie étant un conduit réalisé dans le prolongement axial du disque intérieur sur le dessus de celui-ci ; la face du dessous du disque intérieur étant au moins en partie une membrane filtrante.

**15.** Utilisation d'une méthode selon l'une des revendications 1 à 6 et/ou d'un dispositif selon l'une des revendications 7 à 14 pour la détection et la mesure de concentration en nombre de fibres, en particulier de fibres d'amiantes, dans l'air, notamment dans un environnement empoussiéré.

**16.** Utilisation selon la revendication 15 pour la détection et la mesure de concentrations en fibres OMS d'amiante.

**Patentansprüche**

**1.** Verfahren zum Sortieren von Mikro- und Nanofasern, die in einem Aerosol suspendiert sind, das Fasern unterschiedlicher Größen und gegebenenfalls nichtfaserige Teilchen enthalten kann, umfassend die folgenden Schritte:

a/ Laden der im Aerosol suspendierten Teilchen durch Diffusion von unipolaren Ionen;
b/ Anlegen eines elektrischen Felds zwischen zwei elektrisch leitenden und im Wesentlichen waagerecht angeordneten ebenen Flächen; wobei das elektrische Feld so gerichtet ist, dass es eine elektrostatische Kraft auf die geladenen Teilchen entgegen der Schwerkraft ausübt;
c/ Einleiten eines Aerosolstroms von einem Einlass in einer Höhe, die mindestens einem Teil der Höhe des zwischen den beiden ebenen Flächen begrenzten Raums entspricht; wobei die Strömung des Luftstroms in dem Raum zwischen ebenen Flächen nicht turbulent ist; wobei der Luftstrom von dem und/oder um den Einlass herum bis zu einem oder mehreren Auslässen zirkuliert;
d/ Rückgewinnen des Teils des Luftstroms, der mit Fasern beladen ist und an mindestens einem der Auslässe in dem oberen Teil des Raums zirkuliert, oder Sammeln der Fasern auf der oberen ebenen Fläche, die in Form einer Filtermembran vorliegt; wobei die in dem Teil des Luftstroms zurückgewonnenen oder auf der Filtermembran gesammelten Fasern von den Teilchen, die einen geringeren Formfaktor aufweisen, oder nichtfaserigen Teilchen, die anfänglich im Aerosol vorhanden sind, sortiert werden.

**2.** Sortierverfahren nach Anspruch 1, umfassend ferner einen Schritt d'/ gleichzeitig zum Schritt d/, gemäß dem man den Teil des Luftstroms, der mit nicht faserigen Teilchen beladen ist und an mindestens einem der Auslässe im unteren Teil des Raums zirkuliert, zurückgewinnt oder man nichtfaserige Teilchen auf der unteren ebenen Fläche, die in Form einer Filtermembran vorliegt, sammelt.

**3.** Sortierverfahren nach Anspruch 1 oder 2, wobei die ebenen Flächen rechteckige ebene Platten sind, wobei gemäß dem Verfahren:

- der Schritt c/ durch Einleiten des Aerosols in einen Einlassschlitz ausgeführt wird, der in dem Raum zwischen Platten angeordnet ist, und durch Zirkulation eines Längsstroms gefilterter Luft, der zu beiden Seiten des Schlitzes im Gleichstrom mit dem Aerosolstrom eingeleitet wird;
- der Schritt d/ durch Rückgewinnen des mit Fasern beladenen Teils des Luftstroms in einem Auslasskanal ausgeführt wird, der zwischen der oberen ebenen Platte und einer zwischen den beiden ebenen Platten angeordneten Stromtrennwand begrenzt wird;
- der Schritt d'/ gegebenenfalls durch Rückgewinnen des mit nichtfaserigen Teilchen beladenen Teils des

**13**

Luftstroms in einem Auslasskanal ausgeführt wird, der zwischen der unteren ebenen Platte und einer zwischen den beiden ebenen Platten angeordneten Stromtrennwand begrenzt wird.

4. Sortierverfahren nach Anspruch 1 oder 2, wobei die ebenen Flächen kreisförmige vollwandige Platten sind, wobei gemäß dem Verfahren:

- der Schritt c/ durch Einleiten des Aerosols in einen Einlassschlitz ausgeführt wird, der in dem Raum zwischen Platten angeordnet ist, und durch Zirkulation eines radialen Aerosolstroms zum Mittelpunkt der Flächen hin;
- der Schritt d/ durch Rückgewinnen des mit Fasern beladenen Teils des Luftstroms in einer Auslassleitung ausgeführt wird, die in der axialen Verlängerung der kreisförmigen Platte an deren Oberseite ausgeführt ist;
- der Schritt d'/ gegebenenfalls durch Rückgewinnen des mit nichtfaserigen Teilchen beladenen Teils des Luftstroms in einer Auslassleitung ausgeführt wird, die in der axialen Verlängerung in der kreisförmigen Platte an deren Unterseite ausgeführt ist.

5. Sortierverfahren nach Anspruch 1 oder 2, wobei mindestens die obere ebene Flächen eine kreisförmige Filtermembran ist, wobei gemäß dem Verfahren:

- der Schritt c/ durch Einleiten des Aerosols in einen Einlassschlitz ausgeführt wird, der in dem Raum zwischen Platten oder in dem gesamten Raum zwischen Platten angeordnet ist, und durch Zirkulation eines radialen Aerosolstroms zum Mittelpunkt der Flächen hin;
- der Schritt d/ durch Sammeln der Fasern auf der Filtermembran ausgeführt wird, wobei der Luftstrom, der frei von den gesammelten Fasern ist, in einer Auslassöffnung oberhalb der Filtermembran zurückgewonnen wird;
- der Schritt d'/ gegebenenfalls durch Sammeln der nichtfaserigen Teilchen auf einer Filtermembran ausgeführt wird, wobei der Luftstrom, der frei von den gesammelten Teilchen ist, in einer Auslassöffnung unterhalb der Filtermembran zurückgewonnen wird.

6. Sortierverfahren nach Anspruch 1 oder 2, wobei die ebenen Flächen die Unterseiten von zwei ausgehöhlten Scheiben mit konkavem kreisförmigem Rand sind, die waagerecht koaxial ineinander angeordnet sind und dabei zwischen sich einen Raum definieren; wobei der Einlass eine Leitung ist, die in der axialen Verlängerung der äußeren Scheibe an deren Oberseite ausgeführt ist; wobei der Auslass eine Leitung ist, die in der axialen Verlängerung der inneren Scheibe an deren Oberseite ausgeführt ist; wobei die Unterseite der inneren Scheibe zumindest teilweise eine Filtermembran ist; wobei gemäß dem Verfahren:

- der Schritt b/ durch Anlegen des gleichförmigen elektrischen Felds zwischen den beiden Scheiben ausgeführt wird, wobei das gleichförmige elektrische Feld von unten nach oben zwischen der Unterseite der äußeren Scheibe und der Unterseite der inneren Scheibe gerichtet ist;
- der Schritt c/ durch Einleiten des Aerosols von der Einlassleitung aus ausgeführt wird; wobei die Strömung des Luftstroms in dem Raum zwischen den beiden Scheiben nicht turbulent ist; wobei der Luftstrom von der Einlassleitung bis zur Auslassleitung zirkuliert;
- der Schritt d/ durch Sammeln der Fasern auf der Filtermembran ausgeführt wird; wobei die auf der Filtermembran gesammelten Fasern von den Teilchen mit geringeren Formfaktoren oder nichtfaserigen Teilchen, die anfänglich im Aerosol vorhanden sind, getrennt werden und per Schwerkraft in den Raum zwischen Unterseiten fallen.

7. Vorrichtung (1; 10; 100) zur Umsetzung des Sortierverfahrens nach einem der Ansprüche 1 bis 6, umfassend:

- zwei elektrisch leitende ebene Flächen (2, 3; 20, 30; 200, 300), die im Wesentlichen waagerecht angeordnet sind;
- Mittel zum Anlegen eines elektrischen Felds (E) zwischen den beiden ebenen Flächen, von unten nach oben;
- Mittel (4; 40; 800) zum Einleiten eines Aerosolstroms mit Fasern, die in einem Aerosol suspendiert sind, das Teilchen mit unterschiedlichen Formfaktoren oder nichtfaserige Teilchen enthalten kann, von einem Einlass in einer Höhe, die mindestens einem Teil der Höhe des zwischen den beiden ebenen Flächen begrenzten Raums entspricht;
- Mittel (5) zum Zurückgewinnen des Luftstromteils, der mit Fasern beladen ist und an mindestens einem der Auslässe in dem oberen Teil des Raums zirkuliert, oder Sammeln der Fasern auf der oberen ebenen Fläche, die in Form einer Filtermembran vorliegt.

8. Vorrichtung nach Anspruch 7, umfassend ferner Mittel (5) zum Zurückgewinnen des Luftstromteils, der mit nichtfaserigen Teilchen beladen ist und an mindestens einem der Auslässe im unteren Teil des Raums zirkuliert, oder Sammeln der Teilchen auf der unteren ebenen Fläche, die in Form einer Filtermembran vorliegt.

9. Vorrichtung nach Anspruch 7 oder 8, wobei die beiden ebenen Flächen rechteckige ebene Platten sind, wobei der Einlass ein Schlitz ist, der in dem Raum zwischen Platten angeordnet ist, wobei der Auslass ein Kanal ist, der zwischen der oberen ebenen Platte und einer zwischen den beiden ebenen Platten angeordneten Stromtrennwand begrenzt wird.

10. Vorrichtung nach Anspruch 7 oder 8, wobei die ebenen Flächen kreisförmige vollwandige Platten sind, wobei der Einlass ein kreisförmiger Schlitz ist, der in dem Raum zwischen Platten angeordnet ist, wobei der Auslass eine Leitung ist, die in der axialen Verlängerung in der oberen kreisförmigen Platte ausgeführt ist.

11. Vorrichtung nach Anspruch 10, umfassend ferner eine Leitung zur Rückgewinnung des Teils des Stroms, der die nichtfaserigen Teilchen enthält, wobei die Leitung in der axialen Verlängerung der unteren kreisförmigen Platte ausgeführt ist.

12. Vorrichtung nach Anspruch 7 oder 8, wobei die ebenen Flächen kreisförmige Flächen sind, von denen mindestens die obere eine Filtermembran umfasst; wobei der Einlass ein kreisförmiger Schlitz ist, der in dem Raum zwischen kreisförmigen Flächen angeordnet ist, wobei der Auslass eine Leitung ist, die in der axialen Verlängerung oberhalb der Filtermembran ausgeführt ist.

13. Vorrichtung nach Anspruch 7 oder 8, wobei die ebenen Flächen kreisförmige Flächen sind, von denen mindestens die obere eine Filtermembran umfasst; wobei der Einlass durch den gesamten Raum zwischen kreisförmigen Flächen gebildet wird, wobei der Auslass eine Leitung ist, die in der axialen Verlängerung oberhalb der Filtermembran ausgeführt ist.

14. Vorrichtung nach Anspruch 7 oder 8, wobei die ebenen Flächen die Unterseiten von zwei ausgehöhlten Scheiben mit konkavem kreisförmigem Rand sind, die waagerecht koaxial ineinander angeordnet sind und dabei zwischen sich einen Raum definieren; wobei der Einlass eine Leitung ist, die in der axialen Verlängerung der äußeren Scheibe an deren Oberseite ausgeführt ist; wobei der Auslass eine Leitung ist, die in der axialen Verlängerung der inneren Scheibe an deren Oberseite ausgeführt ist; wobei die Unterseite der inneren Scheibe zumindest teilweise eine Filtermembran ist.

15. Verwendung eines Verfahrens nach einem der Ansprüche 1 bis 6 und/oder einer Vorrichtung nach einem der Ansprüche 7 bis 14 zur Detektion und Messung der zahlenmäßigen Konzentration von Fasern, insbesondere von Asbestfasern, in der Luft, vor allem in einer staubigen Umgebung.

16. Verfahren nach Anspruch 15 zur Detektion und Messung der Konzentrationen von WHO-Asbestfasern.

## Claims

1. Method for sorting micro- and nano-fibers in suspension in an aerosol likely to contain fibers of different sizes and possibly non-fibrous particles, comprising the following steps:

   a/ charging of the particles in suspension in the aerosol, by unipolar ion diffusion;
   b/ application of an electrical field between two electrically conductive flat surfaces, arranged substantially horizontally; the electrical field being directed in such a way that it exerts an electrostatic force on the charged particles, in opposition to the gravitational force;
   c/ introduction of an aerosol flow from an input of a height corresponding to at least a part of the height of the space delimited between the two flat surfaces; the flow of the flow of air being non-turbulent in the space between flat surfaces; the flow of air circulating from and/or around the input to one or more outputs;
   d/ recovery of the part of air flow charged with fibers and circulating at at least one of the outputs in the upper part of the space, or collection of the fibers on the flat surface on top which is in the form of a filtering membrane; the fibers recovered in the part of air flow or collected on the filtering membrane being sorted from the particles exhibiting a smaller form factor or that are non-fibrous initially present in the aerosol.

2. Sorting method according to Claim 1, further comprising a step d'/ simultaneous with the step d/, whereby the part of air flow charged with non-fibrous particles and circulating at at least one of the outputs in the lower part of the space is recovered, or non-fibrous particles are collected on the lower flat surface which takes the form of a filtering membrane.

3.  Sorting method according to Claim 1 or 2, the flat surfaces being rectangular flat plates, whereby:

    - the step c/ is performed by introduction of the aerosol into an input slit arranged in the space between plates and by circulation of a longitudinal flow of filtered air introduced on either side of the slit co-current with the aerosol flow;
    - the step d/ is performed by recovery of the part of the air flow charged with fibers in an output channel delimited between the top flat plate and a flow-separating wall arranged between the two flat plates;
    - if necessary, the step d'/ is performed by recovery of the part of air flow charged with non-fibrous particles in an output channel delimited between the lower flat plate and a flow-separating wall arranged between the two flat plates.

4.  Sorting method according to Claim 1 or 2, the flat surfaces being full circular plates; a method whereby:

    - the step c/ is performed by introduction of the aerosol into an input slit arranged in the space between plates and by circulation of a radial flow of aerosol toward the center of the surfaces;
    - the step d/ is performed by recovery of the part of the air flow charged with fibers in an output duct produced in the axial extension in the circular plate on top thereof;
    - if necessary, the step d'/ is performed by recovery of the part of the air flow charged with non-fibrous particles in an output duct produced in the axial extension in the circular plate below the latter.

5.  Sorting method according to Claim 1 or 2, at least the flat surface on top being a circular filtering membrane, a method whereby:

    - the step c/ is performed by introduction of the aerosol into an input slit arranged in the space between plates or in all the space between plates and by circulation of a radial flow of aerosol toward the center of the surfaces;
    - the step d/ is performed by collection of the fibers on the filtering membrane, the air flow without fibers collected being recovered in an output orifice above the filtering membrane;
    - if necessary, the step d'/ is performed by collection of the non-fibrous particles on a filtering membrane, the air flow without particles collected being recovered in an output orifice below the filtering membrane.

6.  Sorting method according to Claim 1 or 2, the flat surfaces being the underside faces of two openwork disks with concave circular edge, arranged horizontally coaxially to one another defining a space between them; the input being a duct produced in the axial extension of the outer disk above the latter; the output being a duct produced in the axial extension of the inner disk above the latter; the underside face of the inner disk being at least partly a filtering membrane; a method whereby:

    - the step b/ is performed by application of the uniform electrical field between the two disks, the uniform electrical field being directed from bottom to top between the underside face of the outer disk and the bottom face of the inner disk;
    - the step c/ is performed by introduction of the aerosol from the input duct; the flow of the air flow being non-turbulent in the space between the two disks; the air flow circulating from the input duct to the output duct;
    - the step d/ is performed by collection of the fibers on the filtering membrane; the fibers collected on the filtering membrane being separated from the fibers of smaller form factors and that are non-fibrous initially present in the aerosol and having fallen through gravity in the space between faces below.

7.  A device (1; 10; 100) for implementing the sorting method according to one of Claims 1 to 6, comprising:

    - two electrically conductive flat surfaces (2, 3; 20, 30; 200, 300), arranged substantially horizontally;
    - means for applying an electrical field (E) between the two flat surfaces, from the bottom to the top;
    - means (4; 40; 800) for introducing an aerosol flow of fibers in suspension in an aerosol likely to contain factor particles of different shapes or non-fibrous particles, from an input of a height corresponding to at least a part of the height of the space delimited between the two flat surfaces;
    - means (5) for recovering the part of air flow charged with fibers and circulating at at least one of the outputs in the upper part of the space, or collection of the fibers on the flat surface above which is in the form of a filtering membrane.

8. Device according to Claim 7, further comprising means (5) for recovering the part of air flow charged with non-fibrous particles and circulating at at least one of the outputs in the lower part of the space, or collection of the particles on the flat surface below which is in the form of a filtering membrane.

9. Device according to Claim 7 or 8, the two flat surfaces being rectangular flat plates, the input being a slit arranged in the space between plates, the output being a channel delimited between the top flat plate and a flow-separating wall between the two flat plates.

10. Device according to Claim 7 or 8, the flat surfaces being solid circular plates, the input being a circular slit arranged in the space between plates, the output being a duct produced in the axial extension in the top circular plate.

11. Device according to Claim 10, further comprising a duct for recovering the part of the flow containing the non-fibrous particles, the duct produced in the axial extension in the bottom circular plate.

12. Device according to Claim 7 or 8, the flat surfaces being circular surfaces, at least the top one of which comprises a filtering membrane; the input being a circular slit arranged in the space between circular surfaces, the output being a duct produced in the axial extension above the filtering membrane.

13. Device according to Claim 7 or 8, the flat surfaces being circular surfaces, at least the top one of which comprises a filtering membrane; the input being composed of all the space between circular surfaces, the output being a duct produced in the axial extension above the filtering membrane.

14. Device according to Claim 7 or 8, the flat surfaces being the bottom faces of two openwork disks with concave circular edge, arranged horizontally coaxially to one another defining a space between them; the input being a duct produced in the axial extension in the outer disk on top of the latter; the output being a duct produced in the axial extension of the inner disk on top of the latter; the bottom face of the inner disk being at least partly a filtering membrane.

15. Use of a method according to one of Claims 1 to 6 and/or of a device according to one of Claims 7 to 14 for the detection and measurement of concentration in terms of number of fibers, in particular of asbestos fibers, in air, notably in a dusty environment.

16. Use according to Claim 15 for the detection and measurement of concentrations of WHO asbestos fibers.

# Fig.1

# Fig.2

# Fig.3

**Fig.4**

**Fig.5**

**Fig.6**

**Fig.7**

**Fig.8**

**Fig.9**

Fig.10

$Q_1$
EXTRACTION
PRIMAIRE

$q_0$ ENTRÉE AÉROSOL

100

800

600

E

E

E

E

E

300

210

700

$Q_2$
EXTRACTION
SECONDAIRE
(FACULTATIVE)

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 7931734 B2
- WO 2013058429 A1
- KR 101558480 B1
- KR 101322689 B1
- US 6012343 B
- JP 07055689 B

**Littérature non-brevet citée dans la description**

- **W. HINDS.** Aerosol Technology. 1999
- **ZEBEL G. ; HOCHRAINER D. ; BOOSE C.** A sampling method with separated deposition of fibres and other particles. *J. Aerosol Sci.,* 1977, vol. 8, 205-213
- Size Classification of Carbon Fiber Aerosols. **CHEN B.T. ; YEH H.C. ; HOBBS C.H.** Aerosol Sci. Technol. 1993, vol. 19, 109-120
- **CHEN B.T. ; YEH H.C. ; JOHNSON N.F.** Design and use of a virtual impactor and an electrical classifier for generation of test fiber aerosols with narrow size distributions. *J. Aerosol Sci.,* 1996, vol. 27 (1), 83-94
- **HAN R.J. ; MOSS O.R. ; WONG B.A.** Airborne Fiber Separation by Electrophoresis and Dielectrophoresis: Theory and Design Considerations. *Aerosol Sci. Technol.,* 1994, vol. 21, 241-258
- **GRIFFITHS W.D.** The selective separation of aerosol particles of different shapes. *J. Aerosol Sci.,* 1987, vol. 18 (6), 761-763
- **GRIFFITHS W.D.** The shape selective sampling of fibrous aerosols. *J. Aerosol Sci.,* 1988, vol. 19 (6), 703-713
- **BARON P.A. ; DEYE G.J. ; FERNBACK J.** Length separation of fibers. *Aerosol Sci. Technol.,* 1994, vol. 21, 179-192
- **LILIENFELD, P.** Rotational Electrodynamics of Airborne Fibers. *J. Aerosol Sci.,* 1985, vol. 4, 315-322
- **DEYE G.J. ; GAO P. ; BARON P.A. ; FERNBACK J.** Performance Evaluation of a Fiber Length Classifier. *Aerosol Sci. Technol.,* 1999, vol. 30, 420-437
- **DUBEY P. ; GHIA U. ; TURKEVICH L.A.** Numerical investigation of sheath and aerosol flows in the flow combination section of a Baron fiber classifier. *Aerosol Sci. Technol.,* 2014, vol. 48, 896-905
- **EHARA, K. ; HAGWOOD, C. ; COAKLEY, K.J.** Novel method to Classify Aerosol Particles According to Their Mass-to-Charge Ratio. *Aerosol Particle Mass Analyzer, J. Aerosol Sci,* 1996, vol. 27, 217-234
- **OLFERT, J.S. ; COLLINGS, N.** New Method for Particle Mass Classification: the Couette Centrifugal Particle Mass Analyser. *J. Aerosol Sci,* 2005, vol. 36, 1338-1352